# EUROPÄISCHE PATENTSCHRIFT

(11) **EP 0 462 392 B1**
(45) Veröffentlichungstag und Bekanntmachung des Hinweises auf die Patenterteilung: **21.09.1994**
(21) Anmeldenummer: 91107571.1
(22) Anmeldetag: 10.05.1991
(51) Int. Cl.: F16K 17/20

(54) **Hydraulisches Ventil**
Hydraulic valve
Vanne hydraulique

(30) Priorität: 18.06.1990 CH 2022/90
(43) Veröffentlichungstag der Anmeldung: 27.12.1991
(73) Patentinhaber: ASEA BROWN BOVERI AG, 5400 Baden (CH)
(72) Erfinder: Frey, Heinz, CH-5737 Menziken (CH); Plangger, Rico, CH-5300 Turgi (CH)

(56) Entgegenhaltungen:
- EP-A- 0 023 591

## Beschreibung

Die vorliegende Erfindung geht aus von einem hydraulischen Ventil gemäss dem ersten Teil des Anspruchs 1.

Ein solches Ventil ist z.B. aus der EP-A-23 591 bekannt.

Es sind hydraulische Ventile bekannt, welche den Durchfluss eines Fluids freigeben oder abstellen können. Diese Ventile werden häufig durch einen Elektromagneten betätigt. Ein Kraftspeicher stellt sicher, dass diese Ventile bei einem Ausfall der elektrischen Energie schliessen. Ein derartiges Ventil weist eine Dichtungsstelle auf, die entsprechend den jeweiligen Anforderungen ausgebildet ist. Ein axial beweglicher Kolben trägt die beweglichen Teile der Dichtungsstelle, während die festen Teile in ein Gehäuse des Ventils eingelassen sind. Das Fluid, dessen Durchfluss freigegeben oder abgestellt wird, steht unter Druck, doch wird diese Druckenergie in der Regel nicht für die Betätigung des Ventils genutzt, sodass stets noch eine zusätzliche Energiequelle benötigt wird.

Hier will die Erfindung Abhilfe schaffen. Die Erfindung, wie sie in den Ansprüchen gekennzeichnet ist, löst die Aufgabe, ein hydraulisches Ventil zu schaffen, welches keine zusätzliche Energiequelle benötigt.

Die durch die Erfindung erreichten Vorteile sind im wesentlichen darin zu sehen, dass keine separate Leitung erstellt werden muss für eine zusätzliche Energiezufuhr für die Betätigung des Ventils.

Die weiteren Ausgestaltungen der Erfindung sind Gegenstände der abhängigen Ansprüche.

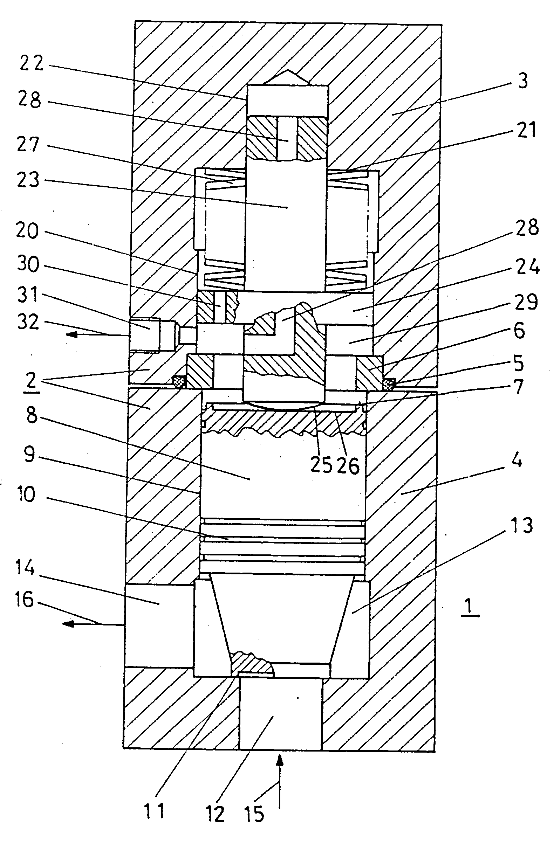

Die Erfindung, ihre Weiterbildung und die damit erzielbaren Vorteile werden nachstehend anhand der Zeichnung, welche lediglich einen möglichen Ausführungsweg darstellt, näher erläutert.

Die einzige Figur zeigt eine Ausführungsform der Erfindung.

Die einzige Figur zeigt in schematischer Darstellung ein hydraulisches Ventil 1, welches in einem zweigeteilten Gehäuse 2 mit einem Oberteil 3 und einem Unterteil 4 untergebracht ist. Das zweigeteilte Gehäuse 2 wird durch nicht dargestellte Schrauben zusammengehalten und an der Trennstelle durch eine Dichtung 5 abgedichtet gegen austretendes Fluid. Zudem ist zwischen Oberteil 3 und Unterteil 4 ein Ring 6 aus Metall fixiert, der als feststehender Teil eines Dichtungssitzes ausgebildet ist. Der zugehörige bewegliche Teil ist als Ringfläche 7 oben an ein Kolbenunterteil 8 angearbeitet. Das Kolbenunterteil 8 ist zylindrisch ausgebildet und gleitet in einer zylindrischen Bohrung 9 des Unterteils 4 des Gehäuses 2. Das Kolbenunterteil 8 wird eng geführt von der Bohrung 9. Das Kolbenunterteil 8 weist im Bereich innerhalb der Bohrung 9 auf der Oberfläche verteilte hydraulische Zentriernuten 10 auf, von denen einige angedeutet sind. Das Kolbenunterteil 8 verjüngt sich etwas nach unten und an sein unteres Ende ist eine Ringfläche 11 angearbeitet, die als beweglicher Teil eines weiteren Dichtungssitzes ausgebildet ist. Der gegenüberstehende feste Teil des Dichtungssitzes ist hier als Teil des Unterteils 4 des Gehäuses 2 ausgeführt. Es ist jedoch auch möglich in das Unterteil 4 hierfür einen speziellen Ring einzulassen. Dieser Dichtungssitz schliesst eine Zuleitung 12 ab gegen eine Ventilkammer 13 im Innern des Unterteils 4. Aus dieser Ventilkammer 13 führt eine Ableitung 14 heraus. Sowohl die Zuleitung 12 als auch die Ableitung 14 sind so gestaltet, dass Rohre in sie eingeschraubt werden können. Durch diese Rohre strömt dann, wie durch einen Pfeil 15 schematisch angedeutet, das Fluid ein, wenn die Ringfläche 11 vom festen Teil des Dichtungssitzes abhebt, und es verlässt die Ventilkammer 13 durch die Ableitung 14 in Richtung eines Pfeiles 16.

Im Oberteil 3 des Gehäuses 2 ist eine zylindrische Bohrung 20 vorgesehen, deren Mittelachse parallel zu der Mittelachse der Bohrung 9 verläuft. Die Bohrung 20 weist einen Absatz 21 auf, von welchem eine Sackbohrung 22 mit kleinerem Durchmesser als der der Bohrung 20, jedoch mit der gleichen Mittelachse, in das Oberteil 3 eingebracht ist. In der Sackbohrung 22 wird ein zylindrisch ausgebildetes Kolbenoberteil 23 geführt, welches im Bereich der Bohrung 20 einen Bund 24 aufweist, welcher durch die Innenwand der Bohrung 20 geführt wird, sodass der Kolbenoberteil 23 sich nicht verkanten kann. Das dem Kolbenunterteil 8 zugewandte Ende 25 des Kolbenoberteils 23 ist ballig ausgebildet und liegt auf einer ebenen Fläche 26 des Kolbenunterteils 8 auf. Es wird durch ein Tellerfedernpaket 27, welches sich einerseits gegen den Absatz 21 und andererseits gegen eine Schulter des Bundes 24 abstützt, gegen das Kolbenunterteil 8 gedrückt. Das Kolbenunterteil 8 überträgt diese Kraft auf den Dichtungssitz mit der Ringfläche 11, welcher die Zuleitung 12 abschliesst.

Das Kolbenoberteil 23 weist eine Bohrung 28 auf, welche das Restvolumen der Sackbohrung 22 mit einem Volumen 29 unterhalb des Bundes 24 verbindet. Der Bund 24 weist Bohrungen 30 auf, welche den durch das Tellerfedernpaket 27 beanspruchten Innenraum der Bohrung 20 mit dem Volumen 29 verbinden. Das Volumen 29 reicht nach unten bis zur Fläche 26 des Kolbenunterteils 23. Durch eine Bohrung 31, in welche eine Rohrverbindung eingeschraubt werden kann, wird das Volumen 29 mit einer nicht dargestellten Ablaufvorrichtung verbunden, sodass Gase und Fluidreste aus dem Volumen 29 in Richtung eines Pfeiles 32 ausgetragen werden können.

Zur Erläuterung der Wirkungsweise sei die einzige Figur näher betrachtet. Das gezeigte hydraulische Ventil 1 kann beispielsweise in einem hydraulischen Sicherheits- und Regelsystem für die Dampfzuführung einer Turbine eingesetzt werden. Als Fluid wäre in diesem Fall beispielsweise ein Hydrauliköl einzusetzen. Zunächst ist das Ventil 1 geschlossen und das in der Zuleitung 12 anstehende Öl unter Druck kann nicht fliessen. Über einen nicht dargestellten Bypass wird jedoch das hydraulische Sicherheits- und Regelsystem mit Öl gefüllt. In der Ableitung 14, die in das hydraulische Sicherheits- und Regelsystem führt, steigt infolgedessen der Druck mit zunehmendem Füllgrad an. Sobald in der Ventilkammer 13 der halbe Nennbetriebsdruck erreicht ist, reicht die vom Druck in der Ventilkammer 13 erzeugte Kraft auf das Kolbenunterteil 8 in Verbindung mit der vom Druck in der Zuleitung 12 erzeugten Kraft aus, um das Kolbenunterteil 8 nach oben zu bewegen gegen die Kraft des Tellerfedernpaketes 27. Das Ventil 1 öffnet, und wie durch die Pfeile 15 und 16 angedeutet, strömt Öl unter Druck durch das Ventil 1 hindurch und speist das Sicherheits- und Regelsystem.

Während des Druckaufbaues in der Ventilkammer 13 sind das Kolbenunter- und -oberteil 8, 23 in der dargestellten Stellung. Durch den Spalt zwischen Kolbenunterteil 8 und der Innenwand der Bohrung 9 wird Öl nach oben gedrückt in das Volumen 29, von wo es, wie der Pfeil 32 andeutet in eine Ablaufvorrichtung geleitet wird. Dieser Spalt darf demnach nur klein sein, denn sonst würde das abströmende Öl einen Druckaufbau in der Ventilkammer 13 verunmöglichen.

In der Offenstellung des Ventils 1, dichtet die gegen den Ring 6 gepresste Ringfläche 7 den Ölfluss in das Volumen 29 ab. Das Öffnen des Ventils 1 muss rasch erfolgen, deshalb wird die Sackbohrung 22 durch die Bohrung 28 und die Bohrung 20 durch die Bohrung 30 entlüftet in das Volumen 29 und weiter durch die Bohrung 31 in die Ablaufvorrichtung. Beim Schliessen des Ventils werden diese Bohrungen entsprechend belüftet, um so eine rasche Schliessbewegung zu erhalten. Die Oberfläche des Kolbenunterteils 8 ist mit Zentriernuten 10 versehen, wodurch eine stets gute Zentrierung des Kolbenunterteils 8 in der Bohrung 9 erreicht und damit ein Klemmen desselben vermieden wird.

Die Montage des Ventils 1 wird dadurch erleichtert, dass es aus zwei Baugruppen zusammengesetzt werden kann. Die eine Baugruppe besteht aus dem Oberteil 3 des Gehäuses 2 mit eingebautem Kolbenoberteil 23, dem Tellerfedernpaket 27 und dem Ring 6. Die andere Baugruppe besteht aus dem Unterteil 4 des Gehäuses 2 mit eingebautem Kolbenunterteil 8. Das Zusammenfügen der beiden Baugruppen ist vergleichsweise einfach möglich, da kein durchgehender Kolben ein aufwendiges Ausrichten auf eine gemeinsame Längsachse beider Teile des Gehäuses verlangt. Das ballig ausgebildete Ende 25 des Kolbenoberteils 23 und die Fläche 26 des Kolbenunterteils 8 wirken einwandfrei zusammen, selbst wenn die jeweiligen Längsachsen gegeneinander versetzt sind, wenn sie zueinander einen Winkel bilden oder wenn beides der Fall ist. Ein Klemmen des Ventils 1 ist auf jeden Fall ausgeschlossen. Der Kolbenoberteil 23 wird doppelt geführt, einmal in der Bohrung 22 und einmal über die Aussenseite des Bundes 24 in der Bohrung 20, sodass auch hier ein Klemmen ausgeschlossen ist.

Wenn das Ventil 1 offen ist, was im Normalbetrieb immer der Fall ist, so strömt Öl durch die Ventilkammer 13 in die Ableitung 14. Dieser Teil des Ventils ist so ausgebildet, dass dieser Strömungsvorgang nicht behindert wird, insbesondere werden Einengungen des Strömungsquerschnitts vermieden. Tritt nun in dem Sicherheits- und Regelsystem ein Druckabfall auf, beispielsweise aufgrund einer Leckage in Form eines Rohrbruches, so fällt sofort auch der Druck in der Ventilkammer 13 auf Werte unterhalb des halben Nenndrucks ab. Dies hat zur Folge, dass die vom Tellerfedernpaket 27 ausgeübte Kraft überwiegt und sofort das Ventil 1 schliesst. Die Nachspeisung vom Öl durch die Zuleitung 12 wird sofort unterbrochen, sodass aus der Leckstelle kein Öl unter Druck herausgepresst wird, sodass Folgeschäden klein gehalten werden können. Besonders vorteilhaft wirkt es sich aus, dass für die Betätigung des Ventils 1 keine Fremdenergie herangeführt werden muss, sodass es unabhängig von einer eventuell mit Störungen behafteten Fremdenergie stets sicher arbeitet.

## Patentansprüche

1. Hydraulisches Ventil (1) mit einem Gehäuse (2), mit mindestens einer Zuleitung (12) und mindestens einer Ableitung (14) für ein druckbeaufschlagtes Fluid, mit einer Dichtungsstelle zwischen der Zuleitung (12) und der Ableitung (14), mit einem axial beweglichen Kolben, der einen beweglichen Teil der Dichtungsstelle trägt, mit einem auf den Kolben in Schliessrichtung der Dichtungsstelle einwirkenden Kraftspeicher,
dadurch gekennzeichnet,
- dass der Kolben allein durch eine Summe der in der mindestens einen Zuleitung (12) und in der mindestens einen Ableitung (14) anstehenden Drücke in Öffnungsrichtung betätigbar ist, und
- dass der Kraftspeicher so bemessen ist, dass die von ihm aufgebrachte Kraft stets grösser ist als die ihr entgegenwirkende, allein vom Druck in der Zuleitung (12) auf den Kolben aufgebrachte Kraft.

2. Hydraulisches Ventil nach Anspruch 1, dadurch gekennzeichnet,
- dass der Kolben einstückig ausgebildet ist.

3. Hydraulisches Ventil nach Anspruch 1, dadurch gekennzeichnet,
- dass der Kolben in mindestens ein Kolbenunterteil (8) und in mindestens ein Kolbenoberteil (23) geteilt ist, welche in Wirkverbindung stehen.

4. Hydraulisches Ventil nach Anspruch 1, dadurch gekennzeichnet,
- dass das Gehäuse (2) in mindestens ein Oberteil (3) und mindestens ein Unterteil (4) geteilt ist.

5. Hydraulisches Ventil nach Anspruch 3, dadurch gekennzeichnet,
- dass ein mit dem Kolbenunterteil (8) zusammenwirkendes Ende (25) des Kolbenoberteils (23) ballig ausgebildet ist, und
- dass das ballig ausgebildete Ende (25) auf einer ebenen Fläche (26) des Kolbenunterteils (8) aufliegt.

6. Hydraulisches Ventil nach Anspruch 3, dadurch gekennzeichnet,
- dass bei geschlossenem Ventil (1) ein Austreten des Fluids am Kolbenunterteil (8) vorbei in eine Ablaufeinrichtung verzögert wird, und
- dass bei geöffnetem Ventil (1) ein Sitzventil das Austreten des Fluids verhindert.

7. Hydraulisches Ventil nach Anspruch 6, dadurch gekennzeichnet,
- dass beim Sitzventil eine Ringfläche (7) mit einem Ring (6) zusammenwirkt, und
- dass die Ringfläche (7) an das Kolbenunterteil (8) angearbeitet ist.

8. Hydraulisches Ventil nach Anspruch 3, dadurch gekennzeichnet,
- dass das Kolbenunterteil (8) hydraulische Zentriernuten (10) aufweist.

9. Hydraulisches Ventil nach Anspruch 3, dadurch gekennzeichnet,
- dass das Kolbenoberteil (23) Bohrungen (28, 30) aufweist durch welche Hohlräume im Gehäuse (2) entlüftet oder belüftet werden können.

10. Hydraulisches Ventil nach Anspruch 1, dadurch gekennzeichnet,
- dass als Kraftspeicher mindestens ein Tellerfedernpaket (27) vorgesehen ist.

## Claims

1. Hydraulic valve (1) having a housing (2), at least one fdeyed line (12) and at least one discharge line (14) for a pressurized fluid, a sealing point between the feed line (12) and the discharge line (14), an axially movable piston which carries a movable part of the sealing point, and an accumulator acting on the piston in the closing direction of the sealing point, characterized in that
- the piston can be actuated in the opening direction merely by a total of the pressures present in the at least one feed line (12) and in the at least one discharge line (14), and
- in that the accumulator is dimensioned such that the force which it applies is always larger than the force, opposing it, applied to the piston merely by the pressure in the feed line (12).

2. Hydraulic valve according to Claim 1, characterized in that
- the piston is constructed in one piece.

3. Hydraulic valve according to Claim 1, characterized in that
- the piston is divided into at least one lower piston part (8) and into at least one upper piston part (23), which are operationally connected.

4. Hydraulic valve according to Claim 1, characterized in that
- the housing (2) is divided into at least one upper part (3) and at least one lower part (4).

5. Hydraulic valve according to Claim 3, characterized in that
- an end (25), interacting with the lower piston part (8), of the upper piston part (23) is constructed convexly, and
- in that the convexly constructed end (25) bears on a flat surface (26) of the lower piston part (8).

6. Hydraulic valve according to Claim 3, characterized in that
- when the valve (1) is closed escape of the fluid past the lower piston part (8) into a discharge device is delayed, and
- in that when the valve (1) is open a seating valve prevents escape of the fluid.

7. Hydraulic valve according to Claim 6, characterized in that
- a ring surface (7) interacts in the seating valve with a ring (6), and
- in that the ring surface (7) is worked onto the lower piston part (8).

8. Hydraulic valve according to Claim 3, characterized in that
- the lower piston part (8) has hydraulic centring grooves (10).

9. Hydraulic valve according to Claim 3, characterized in that
- the upper piston part (23) has bores (28, 30) through which cavities in the housing (2) can be ventilated or aerated.

10. Hydraulic valve according to Claim 1, characterized in that
- at least one plate spring assembly (27) is provided as the accumulator.

## Revendications

1. Vanne hydraulique (1) avec un boîtier (2), avec au moins une conduite d'arrivée (12) et au moins une conduite de sortie (14) pour un fluide soumis à la pression, avec une zone d'étanchéité entre la conduite d'arrivée (12) et la conduite de sortie (14), avec un piston à mouvement axial qui porte une partie mobile de la zone d'étanchéité, avec un accumulateur d'énergie agissant sur le piston dans le sens de la fermeture de la zone d'étanchéité,
caractérisée en ce que
- le piston ne peut être actionné dans le sens de l'ouverture que par une somme des pressions régnant dans la au moins une conduite d'arrivée (12) et dans la au moins une conduite de sortie (14); et en ce que
- l'accumulateur d'énergie est dimensionné de telle sorte que la force qu'il exerce soit toujours plus grande que la force exercée en sens contraire sur le piston uniquement par la pression dans la conduite d'arrivée (12).

2. Vanne hydraulique suivant la revendication 1, caractérisée en ce que
- le piston est réalisé en une pièce.

3. Vanne hydraulique suivant la revendication 1, caractérisée en ce que
- le piston est divisé en au moins une partie de piston inférieure (8) et au moins une partie de piston supérieure (23), qui se trouvent en liaison effective.

4. Vanne hydraulique suivant la revendication 1, caractérisée en ce que
- le boîtier (2) est divisé en au moins une partie supérieure (3) et au moins une partie inférieure (4).

5. Vanne hydraulique suivant la revendication 3, caractérisée en ce que
- une extrémité (25) de la partie supérieure de piston (23) coopérant avec la partie inférieure de piston (8) est de forme sphérique; et en ce que
- l'extrémité de forme sphérique (25) s'applique sur une face plane (26) de la partie inférieure de piston (8).

6. Vanne hydraulique suivant la revendication 3, caractérisée en ce que
- la vanne (1) étant fermée, une sortie du fluide par la partie inférieure de piston (8) vers un dispositif d'évacuation est ralentie; et en ce que
- la vanne (1) étant ouverte, un siège de vanne empêche la sortie du fluide.

7. Vanne hydraulique suivant la revendication 6, caractérisée en ce que
- au siège de vanne, une surface annulaire (7) coopère avec une bague (6); et en ce que
- la surface annulaire (7) est usinée sur la partie inférieure de piston (8).

8. Vanne hydraulique suivant la revendication 3, caractérisée en ce que
- la partie inférieure de piston (8) présente des rainures de centrage hydrauliques (10).

9. Vanne hydraulique suivant la revendication 3, caractérisée en ce que
- la partie supérieure de piston (23)présente des alésages (28, 30) par lesquels des volumes creux dans le boîtier (2) peuvent être vidés ou remplis d'air.

10. Vanne hydraulique suivant la revendication 1, caractérisée en ce que
- en guise d'accumulateur d'énergie, il est prévu au moins un empilement de rondelles élastiques (27).
